# EUROPEAN PATENT APPLICATION

(11) **EP 4 645 878 A1**
(43) Date of publication of application: **05.11.2025**
(21) Application number: 23909073.1
(22) Date of filing: 29.06.2023
(51) Int. Cl.: H04N 21/4402

(54) **MULTIMEDIA PLAYING METHOD, BROWSER, AND ELECTRONIC DEVICE**

(30) Priority: 29.12.2022 CN 202211708270
(71) Applicant: Hangzhou Hikvision Digital Technology Co., Ltd., Hangzhou, Zhejiang 310051 (CN)
(72) Inventor: YANG, Fangfang, Hangzhou, Zhejiang 310051 (CN); LI, Zhonghu, Hangzhou, Zhejiang 310051 (CN); CHEN, Zhe, Hangzhou, Zhejiang 310051 (CN)
(74) Representative: Piticco, Lorena
(86) International application number: PCT/CN2023/103992
(87) International publication number: WO 2024/139129

(57) **Abstract**

Provided in the embodiments of the present application are a multimedia playing method, a browser, and an electronic device. The method comprises: acquiring an encapsulated video code stream to be played by means of a browser, wherein a hardware decoder and a WebAssembly (Wasm) module are integrated in the browser; calling the Wasm module to parse the encapsulated video code stream to obtain coded video data in the encapsulated video code stream; calling an interface provided by the hardware decoder, and inputting the coded video data into the hardware decoder for hard decoding, so as to obtain original video data; rendering the original video data, so as to obtain a video picture; and displaying the video picture. The present application can not only improve compatibility but also reduce system resources occupied during video playing.

## Description

The present application claims the priority to a Chinese patent application No. 202211708270.9 filed with the China National Intellectual Property Administration (CNIPA) on December 29, 2022 and entitled "MULTIMEDIA PLAYING METHOD, BROWSER, AND ELECTRONIC DEVICE", which is incorporated herein by reference in its entirety.

### Technical Field

The present application relates to the technical field of multimedia, in particular to a multimedia playback method, a browser and an electronic device.

### Background

Due to a large data amount of video data, the video data in a video code stream is typically coded to facilitate transmission of the video code stream. Therefore, decoding is required during the process of playing the video code stream in a browser. In related art, the browser performs decoding by running a decoder, such as a Video tag.

If the decoder run by the browser is a hardware decoder, it can only decode video formats supported by the hardware, resulting in poor compatibility. But if the decoder run by the browser is a software decoder, the large amount of calculation required for software decoding may lead to excessive system resource consumption during video playback. Therefore, how to improve compatibility while reducing system resource consumption during video playback has become an urgent technical issue to be addressed.

### Summary

The purpose of embodiments of the present application is to provide a multimedia playback method, a browser, and an electronic device, in order to improve the compatibility while reducing the system resources consumption during video playback. Specific technical solutions are as follows:
According to a first aspect of the present application, a multimedia playback method is provided, including:
acquiring an encapsulated video code stream to be played by a browser, wherein a hardware decoder and a WebAssembly (Wasm) module are integrated in the browser;
invoking the Wasm module to parse the encapsulated video code stream to obtain encoded video data in the encapsulated video code stream;
invoking an interface provided by the hardware decoder to input the encoded video data into the hardware decoder for hardware decoding to obtain original video data;
rendering the original video data to obtain a video frame;
displaying the video frame.

In one possible embodiment, invoking the interface provided by the hardware decoder to input the encoded video data into the hardware decoder for hardware decoding to obtain the original video data includes:
invoking the interface provided by the hardware decoder to input the encoded video data into the hardware decoder running in a background process for hardware decoding to obtain the original video data, wherein the background process is a thread independent of a main thread for running the browser.

In one possible embodiment, rendering the original video data to obtain the video frame, includes:
invoking an interface provided by the browser by the main thread or the background process, to render the original video data to obtain the video frame.

In one possible embodiment, the original video data is bitmap data, the method further includes:
storing the original video data in a preset bitmap linked list;
wherein rendering the original video data to obtain the video frame, includes:
   extracting bitmap data from the bitmap linked list;
   rendering the extracted bitmap data to obtain the video frame.

In one possible embodiment, wherein invoking the interface provided by the hardware decoder to input the encoded video data into the hardware decoder running in the background process for hardware decoding to obtain the original video data, includes:
invoking the interface provided by the hardware decoder to input the encoded video data into the hardware decoder running in the background process for hardware decoding through a PostMessage messaging method to obtain the original video data.

In one possible embodiment, invoking the Wasm module to parse the encapsulated video code stream to obtain the encoded video data in the encapsulated video code stream, includes:
invoking a demultiplexing (DEMUX) module in the Wasm module to parse the encapsulated video code stream to obtain raw video data;
storing the raw video data in a preset raw data linked list as the encoded video data in the encapsulated video code stream.

In one possible embodiment, rendering the original video data to obtain the video frame, includes:
invoking the interface provided by the browser by the main thread or the background process, to render the original video data to obtain the video frame.

In one possible embodiment, the method further includes:
acquiring an encapsulated audio code stream to be played by the browser;
invoking the Wasm module to parse the encapsulated audio code stream, to obtain encoded audio data in the encapsulated audio code stream;
decoding the encoded audio data to obtain original audio data;
rendering the original audio data to obtain an audio signal;
playing the audio signal.

In one possible embodiment, the original audio data is pulse code modulation (PCM) data, the method further includes:
storing the original audio data in a preset PCM linked list;
rendering the original audio data to obtain the audio signal, includes:
   extracting PCM data from the PCM linked list;
   rendering the extracted PCM data to obtain the audio signal.

In one possible embodiment, decoding the encoded audio data to obtain the original audio data, includes:
invoking the Wasm module to decode the encoded audio data to obtain the original audio data; or
invoking the interface provided by the hardware decoder to input the encoded audio data into the hardware decoder for hardware decoding to obtain the original audio data.

According to a second aspect of the present application, a browser is further provided, which includs a main thread module, a hardware decoding module, and a WebAssembly (Wasm) module; wherein
the main thread module is configured for acquiring an encapsulated video code stream to be played by the browser;
the Wasm module is configured for parsing the encapsulated video code stream to obtain encoded video data in the encapsulated video code stream;
the hardware decoding module is configured for invoking an interface provided by a hardware decoder to input the encoded video data into the hardware decoder for hardware decoding to obtain original video data; rendering the original video data to obtain a video frame; playing the video frame.

In one possible embodiment, the hardware decoding module invoking the interface provided by the hardware decoder to input the encoded video data into the hardware decoder for hardware decoding to obtain the original video data, includes:
invoking the interface provided by the hardware decoder to input the encoded video data into the hardware decoder running in a background process for hardware decoding to obtain the original video data, wherein the background process is a thread independent of a main thread for running the browser.

In one possible embodiment, the hardware decoding module rendering the original video data to obtain the video frame, includes:
invoking an interface provided by the browser by the main thread or the background process, to render the original video data to obtain the video frame.

In one possible embodiment, the original video data is bitmap data, and the hardware decoding module is further configured for storing the original video data in a preset bitmap linked list;
the hardware decoding module rendering the original video data to obtain the video frame includes:
extracting bitmap data from the bitmap linked list;
rendering the extracted bitmap data to obtain the video frame.

In one possible embodiment, the hardware decoding module rendering the original video data to obtain the video frame includes:
invoking the interface provided by the browser by the main thread or the background process, to render the original video data to obtain video frame.

In one possible embodiment, the hardware decoding module invoking the interface provided by the hardware decoder to input the encoded video data into the hardware decoder running in the background process for hardware decoding to obtain the original video data, includes:
invoking the interface provided by the hardware decoder to input the encoded video data into the hardware decoder running in the background process for hardware decoding through a PostMessage messaging method to obtain the original video data.

In one possible embodiment, the Wasm module parsing the encapsulated video code stream to obtain the encoded video data in the encapsulated video code stream, includes:
invoking a demultiplexing (DEMUX) module in the Wasm module to parse the encapsulated video code stream to obtain raw video data; and storing the raw video data in a preset raw data linked list as the encoded video data in the encapsulated video code stream.

In one possible embodiment, the main thread module is further configured for acquiring an encapsulated audio code stream to be played by the browser;
the Wasm module is further configured for parsing the encapsulated audio code stream to obtain encoded audio data in the encapsulated audio code stream; decoding the encoded audio data to obtain the original audio data; rendering the original audio data to obtain an audio signal; and playing the audio signal.

In one possible embodiment, the original audio data is pulse code modulation (PCM) data, and the Wasm module is further configured for storing the original audio data in a preset PCM linked list;
the Wasm module rendering the original audio data to obtain the audio signal, includes:
extracting PCM data from the PCM linked list;
rendering the extracted PCM data to obtain the audio signal.

In one possible embodiment, the main thread module is further configured for acquiring an encapsulated audio code stream to be played by the browser;
the Wasm module is further configured for parsing the encapsulated audio code stream to obtain encoded audio data in the encapsulated audio code stream;
the hardware decoding module is further configured for invoking the interface provided by the hardware decoder to input the encoded audio data into the hardware decoder for hardware decoding to obtain the original audio data; rendering the original audio data to obtain an audio signal; and playing the audio signal.

According to a third aspect of the present application, an electronic device is provided, which includes:
a memory configured for storing a computer program;
a processor configured for implementing any one of the methods according to the first aspect when executing the program stored in memory.

According to a fourth aspect of the present application, a computer readable storage medium is further provided, which stores a computer program stored thereon, which, when executed by the processor, implements any one of the methods according to the first aspect.

Beneficial effects of the embodiments of the present application are as follows:
In the multimedia playback method, the browser, and the electronic device provided by the embodiments of the present application, the Wasm module can be utilized to parse the encapsulated video code stream, and the parsed encoded video data can be input into the hardware decoder through the interface provided by the hardware decoder, so that the hardware decoder can perform decoding on the encoded video data that has been decapsulated, to obtain the original video data and the video frame is played after been rendered. Since the Wasm module is developed based on high-level programming languages, it can implement more parsing methods, compared with a hardware native method, to parse encapsulated video code streams with multiple different encapsulations. In addition, the hardware decoder only needs to decode the encoded video data without concerning the encapsulation format of the video code stream. Therefore, the multimedia playback method provided herein is compatible with multiple encapsulated video code streams with different encapsulations, that is, significantly improving compatibility. Moreover, as the multimedia playback method provided herein employs the hardware decoder for decoding, it effectively reduces the calculation amount required for decoding, thereby effectively decreasing system resources consumption during video playback. That is, the multimedia playback method provided by the present application not only improves compatibility but also reducing system resources consumption during video playback.

Of course, it is not necessary for any product or method implementing the present application to achieve all the advantages described above simultaneously.

### Brief Description of the Drawings

The accompanying drawings described here are intended to provide further understandings of the present application and to constitute a part of the same. The illustrative embodiments of the present application and their descriptions are intended to explain the present application and do not constitute an improper limitation of the present application.
Fig. 1a is a schematic diagram of an application scenario of a multimedia playback method provided by the present application;
Fig. 1b is a schematic diagram of a video playback method provided by a browser provided by the present application;
Fig. 1c is a schematic diagram of another video playback method provided by a browser provided by the present application;
Fig. 2 is a schematic diagram of a flow of the multimedia playback method provided by the present application;
Fig. 3 is a schematic diagram of a framework of a system of the browser provided by the present application;
Fig. 4 is a schematic diagram of a structure of an electronic device provided by the present application.

### Detailed Description

The technical solutions of embodiments of the present application will be described in detail below with reference to the accompanying drawings of the embodiments of the present application. Obviously, the described embodiments are only some, and not all, of the embodiments of the present application. All other embodiments obtained based on the embodiments of the present application by those skilled in the art fall into the scope of protection of the present application.

In order to provide a clearer explanation of a multimedia playback method provided by the present application, an exemplary description of a possible application scenario of the multimedia playback method provided by the present application is provided below. It is understood that the following example is only one possible application scenario of the multimedia playback method provided by the present application, in other possible embodiments, the multimedia playback method provided by the present application can also be applied to other possible application scenarios, and the following example imposes no limitations in this regard.

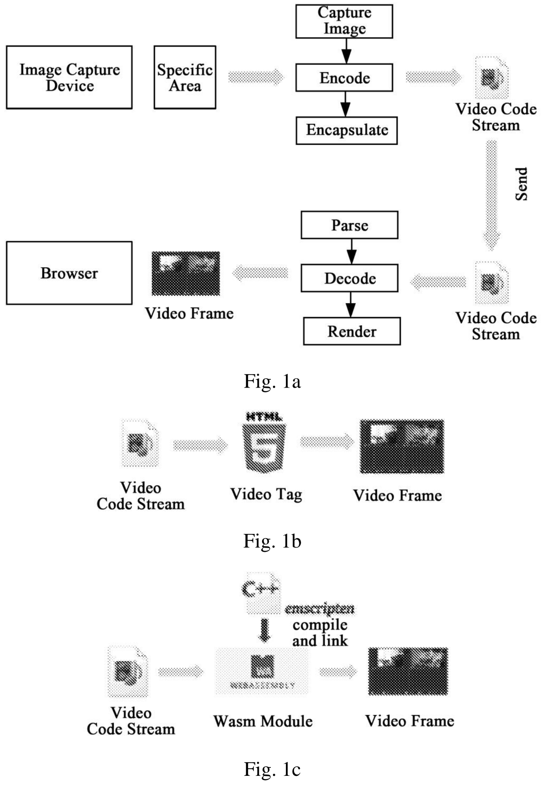

As shown in Fig. 1a, a user remotely accesses an image capture device through a browser to watch a video captured by the image capture device. The image capture device is configured for capturing images of a specific area and performing pet detection on thees images to determine that any pets present in these images. The image capture device encodes the captured original video data to obtain encoded video data, encapsulates the encoded video data together with a detection result of the pet detection on the original video data, so as to obtain an encapsulated video code stream, and the encapsulated video code stream is transmitted to a browser. Correspondingly, during video playback, the browser needs to sequentially perform operations: decapsulation (hereinafter referred to as parsing), decoding, and rendering.

The browser provides the following two video playback methods:

### Method 1:

As shown in Fig. 1b, the browser inputs the encapsulated video code stream into a Video tag provided by HTML5 (Hyper Text Markup Language 5), the Video tag then: parses the encapsulated video code stream to obtain encoded video data, decodes the encoded video data to obtain original video data, and renders the original video data, so as to display a video frame in the browser.

### Method 2:

As shown in Fig. 1c, a developer develops and obtains a functional module with video playback capabilities by using C, C++ or other high-level programming languages in advance, and compiles the functional module into a WebAssembly (Wasm for short) module by using emscripten (a compilation tool), and integrates the Wasm module into the browser. The browser inputs the encapsulated video code stream into the Wasm module, the Wasm module then: parses the encapsulated video code stream to obtain encoded video data, and decodes the encoded video data to obtain original video data, and renders the original video data, so as to display a video frame in the browser.

For Method 1: since the Video tag relies on hardware native method to realize video playback, it can only parse information supported by hardware from the encapsulated video code stream, such as encoded video data in specific formats, but fails to extract information unsupported by hardware from the encapsulated video code stream, such as encoded video data in unsupported formats and the above-mentioned detection results. Consequently, only a subset of the encapsulated video code streams can be successfully played by Method 1, and the detection result cannot be successfully retrieved and displayed, that is, Method 1 has limited compatibility and lacks support for displaying the detection result.

For Method 2: since the Wasm module uses software decoding, that is, the video playback is not completely based on a hardware native method, CPU is further need to be invoked to perform partial calculation, which results in higher consumption of system resources.

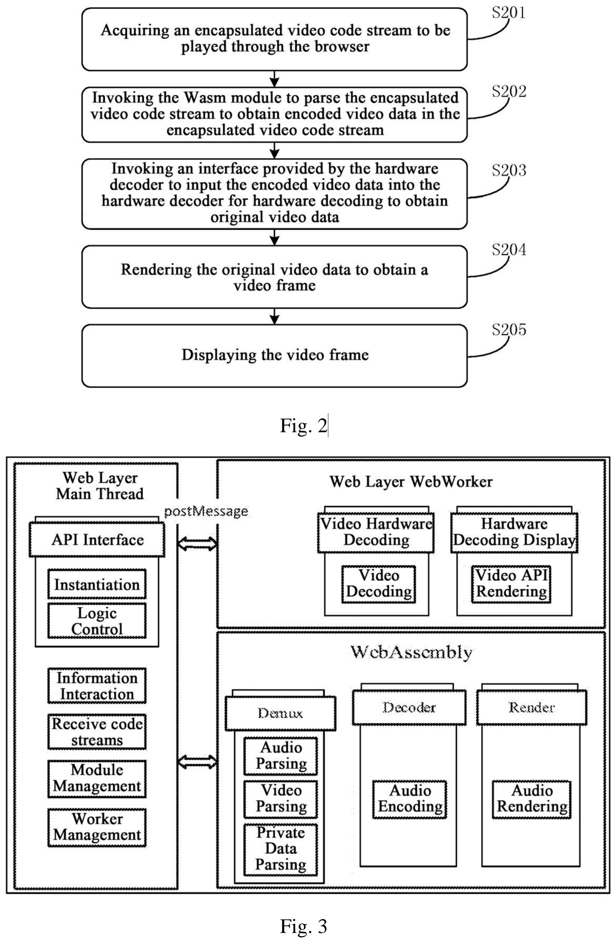

Based on this, the present application provides a multimedia playback method, which is applied to any electronic device with multimedia playback capabilities, including but not limited to a computer, a mobile phone, a tablet, etc. The multimedia playback method provided by the present application, as shown in Fig. 2, includes: S201: Acquiring an encapsulated video code stream to be played by the browser.

Wherein, a hardware decoder and a Wasm module are integrated in the browser.

S202: Invoking the Wasm module to parse the encapsulated video code stream to obtain encoded video data in the encapsulated video code stream.

S203: Invoking an interface provided by the hardware decoder to input the encoded video data into the hardware decoder for hardware decoding to obtain original video data.

S204: Rendering the original video data to obtain a video frame.

S205: Displaying the video frame.

Using this embodiment, the Wasm module is used to parse the encapsulated video code stream, and the parsed encoded video data can be input into the hardware decoder through the interface provided by the hardware decoder, so that the hardware decoder can perform decoding on the encoded video data that has been decapsulated, to obtain the original video data, and the video frame is played after been rendered. Since the Wasm module is developed based on high-level programming languages, it can implement more parsing methods, compared with the hardware native method, to parse encapsulated video code streams with multiple different encapsulations. In addition, the hardware decoder only needs to decode the encoded video data without concerning the encapsulation format of the video code stream. Therefore, the multimedia playback method provided by the present application is compatible with multiple encapsulated video code streams with different encapsulations , that is, significantly improving compatibility. Moreover, since the multimedia playback method provided by the present application employs the hardware decoder for decoding, it effectively reduces the calculation amount required for decoding, thereby effectively decreasing system resources consumption during video playback. That is, the multimedia playback method provided in by the present application not only improves compatibility but also reducing system resources consumption during video playback.

The following will separately explain the above-mentioned S201-S205:
Wherein, in S201, different hardware decoders may be integrated in depending on different browsers, and the hardware decoder herein refers to a decoder supporting hardware decoding. The Wasm module should at least have the capability to parse the encapsulated video code stream to obtain the encoded video data. Moreover, the encapsulated video code stream also includes data (hereinafter referred to as private data) formed by video data processing (such as object detection, adding intelligent information, etc.) by the image capture device (such as network camera, mobile phone, etc.) or an image storage device (such as network video recorder, hard disk recorder, etc.) is included, such as the application scenario of the above-mentioned detection results. The Wasm module may also have the capability to parse the encapsulated video code stream to obtain private data. Exemplarily, the Wasm module is configured with a private protocol corresponding to the private data, and the Wasm parses the encapsulated video code stream according to a parsing method specified in the private protocol, to obtain the private data.

In S202, the Wasm module parses the encapsulated video code stream to at least obtain the encoded video data, and may also parse the encapsulated video code stream according to the private protocol supported by the Wasm module, to obtain the private data, such as the above-mentioned detection results, thereby solving the problem in Method 1 that the detection result cannot be displayed. According to actual requirements, the Wasm may support encapsulated video code streams with different encapsulation formats, and the Wasm should support all common encapsulation formats as far as possible, such as PS (Program Stream), RTP (Real-time Transport Protocol), FLV (Flash Video, a streaming media video format), MP4 (a compression encoding standard for audio and video information), HIK (an encapsulation format), etc.

In S203, the interface provided by the hardware decoder is an interface that can directly invoke an existing media component and codec in the browser. Taking the Chrome browser (a browser name) as an example, this interface is WebCodecsAPI (an interface of browser's codec). Through this interface, the video data can be input into the hardware decoder to be hard decoded by the hardware decoder, so as to obtain the original video data.

The data format of the original video data may be different according to different application scenarios. Exemplarily, in one possible embodiment, the original video data is vector graphics data, in another possible embodiment, the original video data is bitmap data. For the case of the original video data being bitmap data, the decoded original video data may be stored in a preset bitmap linked list. When the original video data is subsequently rendered, the bitmap data may be extracted from the bitmap linked list, and the extracted bitmap data is rendered to obtain a video frame.

The bitmap linked list is a linked list, which includes multiple entries. Each of the entries is configured for storing data and storing an pointer to a next entry. Taking the bitmap linked list as an example, each entry in the bitmap linked list is configured for storing the bitmap data and storing an pointer to the next entry.

When storing the bitmap data into the bitmap linked list, the bitmap data is stored in the current write-entry, and an entry pointed by the pointer in the current entries is taken as a new current write-entry. The current write-entry is initially an initial bitmap entry, which may be any entry in the bitmap linked list. However, to make the most of storage space, the initial bitmap entry should be as close as possible to the first entry in the bitmap linked list.

When reading the bitmap data from the bitmap linked list, the bitmap data stored in a current read-entry is read from the bitmap linked list, and an entry pointed by the pointer in the current storage entries is taken as a new current storage entry. The current storage entry is initially an initial bitmap entry.

Moreover, to avoid a renderer configured for rendering the original video data from reading too much bitmap data at one time, which would result too much cache is occupied for caching bitmap data, the renderer may read one piece of the bitmap data from the bitmap linked list every preset duration. The preset duration depends on a frame rate of the video code stream. The preset duration should not exceed an interval between two consecutive frames. Exemplarily, assuming the frame rate of the video code stream is 20 frames/second (i.e., one video frame is played every 50ms), the preset duration should not be longer than 50ms and should be as close to 50ms as possible.

It is understood that the hardware decoder is a decoder integrated in the browser, which can be run in the main thread of the browser for decoding to obtain the original video data. However, if the hardware decoder is run in the main thread of the browser, due to a limited processing capacity, the main thread may fail to respond to user operations in time, that is, causing the browser user interface to get stuck. Exemplarily, a user clicks a toolbar button of the browser to expand the toolbar while watching a video through the browser. Since the main thread is running the hardware decoder, the main thread fails to respond to the user's click operation in time, which causes the browser to take a long time to expand the toolbar.

Based on this, in one possible embodiment, the interface provided by the hardware decoder is invoked to input the video data into the hardware decoder run in a background process for hardware decoding to obtain the original video data. The hardware decoder runs in the background process for hardware decoding, which can avoid the user interface from being stuck caused by the main thread running the hardware decoder, and improve a response speed of the browser.

The background process is any thread that operates independent of the main thread and is capable of running the hardware decoder. Exemplarily, the background process is a WebWorker process, which interacts with the main thread through PostMessage (a function for messages passing). In one possible embodiment, after the WebWorker process completes the decoding of the encoded video data, the decoded original video data is sent to the main thread via the PostMessage for rendering. In another example, the background process in the present application may also be a shared worker process. The present application is not limited to this.

In another possible embodiment, after the WebWorker process completes the decoding of the encoded video data, it invokes the interface provided by the browser to render the decoded original video data, and sends the rendered video frame to the main thread via PostMessage for display.

In this embodiment, both decoding and rendering are implemented by the background process, which can further reduce the calculation amount required by the main thread, thereby the response rate of the browser is further improved and the probability of being stuck is reduced.

In S204, as described in S203, rendering may be performed by the background process or by the main thread.

In S205, only the video frame may be displayed, or both the video frame and other information other than the video frame, such as the above-mentioned detection results, may be displayed at the same time.

To more clearly explain the multimedia playback method provided by the present application, an exemplary description is provided below in combination with the system framework of the browser. Referring to Fig. 3, which shows a schematic diagram of a framework of the system of the browser provided by the present application, including: a Web layer and a Wasm layer. The Web layer includes a main thread module and a WebWorker module, the Wasm layer includes a Wasm module. Wherein, the main thread module includes an API interface, instantiation, logic control, information interaction, receiving code stream, module management, and Worker management. The API interface is configured for connecting the WebWorker module, the instantiation is configured for instantiating the main thread program, the logic control is configured for controlling calculation logic of the main thread, the information interaction is configured for implementing data interaction between modules, the receiving data stream is configured for implementing data transmission between modules, the module management is configured for managing each of the modules, and the Worker management is configured for managing the WebWorker module.

Wherein, the main thread module is configured for information interaction in the user interface, which receives video data sent by a device, and manages each of the modules. The Wasm module includes a Demux (demultiplexing) module, a Decoder module, and a Render module.

The Demux module is configured for parsing an encapsulated audio and video code stream to obtain encoded video data, encoded audio data, and private data therefrom. The Decoder module is configured for decoding the encoded audio data to obtain original audio data. The Render module is configured for rendering the original audio data to obtain an audio signal.

The WebWorker module includes a hardware decoder (video hardware decoding) and a hardware decoding display module. Wherein, the hardware decoder is configured for performing hardware decoding on the encoded video data to obtain the original video data, and the hardware decoding display module is configured for rendering the original video data to obtain a video frame.

In this example, the video playback process is as follows:
Step 1: The main thread module acquires an encapsulated video code stream to be played, that is, the above-mentioned step S201 is realized.

Step 2: The main thread interacts with the Wasm module to send the encapsulated video code stream to the Wasm module.

Step 3: The Wasm module parses the encapsulated video code stream through the Demux module to obtain raw video data, wherein the raw video data is equivalent to the above-mentioned encoded video data. This step realizes the above-mentioned step S202. The Wasm module sends the encoded video data to the WebWorker module through a PostMessage method.

Step 4: The WebWorker module invokes the hardware decoder by using WebCodecs for hardware decoding the raw video data, to obtain original video data, that is, the above-mentioned step S203 is realized.

Step 5: The WebWorker module invokes an interface of the browser through a hardware decoding display module to render the original video data, to obtain a video frame, and displays the video frame, that is, implements the above-mentioned steps S204 and S205 are realized.

Wherein, the raw video data is stored in a preset raw data linked list as the encapsulated video code stream. The raw data linked list is a linked list, the format of which is the same as the above-mentioned bitmap linked list, the only difference is that the data stored in each entry of the raw data linked list is raw video data, whereas the data stored in each entry of the bitmap linked list is bitmap data.

When storing the raw video data into the raw data linked list, the raw video data is stored in the current write-entry, and an entry pointed by the pointer in the current entries is taken as a new current write-entry. The current write-entry is initially an initial raw data entry, which may be any entry in the raw data linked list. However, to make the most of storage space, the initial raw data entry should be as close as possible to the first entry in the raw data linked list.

When reading raw data from the raw data linked list, the raw data stored in a current read-entry is read from the raw data linked list, and an entry pointed by the pointer in the current storage entries is taken as a new current storage entry. The current storage entry is initially the initial raw data entry.

Moreover, to avoid the hardware decoder configured for decoding the raw video data from reading too much raw video data at one time, which would result too much cache is occupied for caching raw video data, the hardware decoder may callback one piece of the raw video data from the raw video linked list every preset duration. The preset duration depends on the amount of raw video data decoded by the hardware decoder per unit time. Exemplarily, assuming the video code stream decodes 20 pieces of the raw video data per second (i.e., one video frame is decoded every 50ms), the preset duration should not be longer than 50ms and should be as close to 50ms as possible.

Moreover, the system framework shown in Fig. 3 can not only implement video playback but also audio playback. The process of audio playback is as follows:
Step 6: The main thread module acquires the encapsulated audio code stream to be played.

Step 7: The main thread interacts with the Wasm module to send the encapsulated audio code stream to the Wasm module.

Step 8: The Wasm module parses the encapsulated audio code stream through the Demux module to obtain the raw audio data (hereinafter referred to as encoded audio data).

Step 9: The Wasm module decodes the encoded audio data through the Decoder module to obtain the original audio data.

Step 10: The Wasm module renders the encoded audio data through the Render module to obtain the audio signal and plays the audio signal.

Wherein, the original audio data may be PCM (Pulse Code Modulation) data, and the decoded original video data may be stored in a preset PCM linked list. When rendering the original audio data subsequently, the PCM data may be extracted from the PCM linked list and the extracted PCM data is rendered, and the audio signal is obtained.

The PCM linked list is a linked list, the format of which is the same as the above-mentioned bitmap linked list, the only difference is that the data stored in each entry of the PCM linked list is PCM data, whereas the data stored in each entry of the bitmap linked list is bitmap data.

When storing the PCM data into the PCM linked list, the PCM data is stored in the current write-entry, and an entry pointed by the pointer in the current entries is taken as a new current write-entry. The current write-entry is initially an initial PCM entry, which may be any entry in the PCM linked list. However, to make the most of storage space, the initial PCM entry should be as close as possible to the first entry in the PCM linked list.

When reading the PCM data from the PCM linked list, the PCM data stored in the current read-entry is read from the PCM linked list, and an entry pointed by the pointer in the current storage entries is taken as a new current storage entry. The current storage entry is initially the initial PCM entry.

Moreover, to avoid the renderer used for rendering the original audio data from reading too much PCM data at one time, which would result too much cache is occupied for caching PCM data, the renderer may read one piece of the PCM data from the PCM linked list every preset duration. The preset duration depends on the frame rate of the audio code stream. Exemplarily, assuming the frame rate of the video code stream is 20 frames/second (i.e., one video frame is played every 50ms), the preset duration should not be longer than 50ms and should be as close to 50ms as possible.

It is understood that Step 6 to Step 10 are only one audio playback method provided by the present application. In other possible embodiments, the WebWorker module may also be responsible for decoding and rendering audio data, that is, after Step 8, the Wasm module sends the encoded audio data to the WebWorker module through the PostMessage method, and the WebWorker module decodes the encoded audio data to obtain the original audio data, and renders the original audio data to obtain the audio signal and plays the audio signal.

Corresponding to the multimedia playback method provided by the present application, the present application further provides a browser, including:
a main thread module, a hardware decoding module, and a WebAssembly (Wasm) module;
the main thread module is configured for acquiring an encapsulated video code stream to be played by the browser;
the Wasm module is configured for parsing the encapsulated video code stream to obtain encoded video data in the encapsulated video code stream;
the hardware decoding module is configured for invoking an interface provided by a hardware decoder to input the encoded video data into the hardware decoder for hardware decoding to obtain original video data; rendering the original video data to obtain a video frame; playing the video frame.

In one possible embodiment, the hardware decoding module rendering the original video data to obtain the video frame, includes:
invoking an interface provided by the browser by the main thread or the background process to render the original video data to obtain the video frame.

In one possible embodiment, the original video data is bitmap data, and the hardware decoding module is further configured for storing the original video data in a preset bitmap linked list;
the hardware decoding module rendering the original video data to obtain the video frame includes:
extracting bitmap data from the bitmap linked list;
rendering the extracted bitmap data to obtain the video frame.

In one possible embodiment, the hardware decoding module rendering the original video data to obtain the video frame includes:
invoking an interface provided by the browser by the main thread or the background process to render the original video data to obtain the video frame.

In one possible embodiment, the hardware decoding module invoking the interface provided by the hardware decoder to input the encoded video data into the hardware decoder running in the background process for hardware decoding to obtain the original video data, includes:
invoking the interface provided by the hardware decoder to input the encoded video data into the hardware decoder running in the background process for hardware decoding through a PostMessage messaging method to obtain the original video data.

In one possible embodiment, the Wasm module parsing the encapsulated video code stream to obtain the encoded video data in the encapsulated video code stream, includes:
invoking a demultiplexing (DEMUX) module in the Wasm module to parse the encapsulated video code stream to obtain raw video data; and storing the raw video data in a preset raw data linked list as the encoded video data in the encapsulated video code stream.

In one possible embodiment, the main thread module is further configured for acquiring an encapsulated audio code stream to be played by the browser;
the Wasm module is further configured for parsing the encapsulated audio code stream to obtain encoded audio data in the encapsulated audio code stream; decoding the encoded audio data to obtain original audio data; rendering the original audio data to obtain an audio signal; and playing the audio signal.

In one possible embodiment, the original audio data is pulse code modulation (PCM) data, and the Wasm module is further configured for storing the original audio data in a preset PCM linked list;
the Wasm module rendering the original audio data to obtain the audio signal, includes:
extracting PCM data from the PCM linked list;
rendering the extracted PCM data to obtain the audio signal.

In one possible embodiment, the main thread module is further configured for acquiring an encapsulated audio code stream to be played by the browser;
the Wasm module is further configured for parsing the encapsulated audio code stream to obtain encoded audio data in the encapsulated audio code stream;
the hardware decoding module is further configured for invoking the interface provided by the hardware decoder to input the encoded audio data into the hardware decoder for hardware decoding to obtain the original audio data; rendering the original audio data to obtain an audio signal; and playing the audio signal.

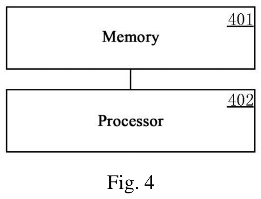

An embodiment of the present application further provides an electronic device, as shown in Fig. 4, including:
a memory 401 configured for storing a computer program;
a processor 402 configured for implementing the following steps when executing the computer program stored on the memory:
   acquiring an encapsulated video code stream to be played by a browser, wherein a hardware decoder and a WebAssembly (Wasm) module are integrated in the browser;
   invoking the Wasm module to parse the encapsulated video code stream to obtain encoded video data in the encapsulated video code stream;
   invoking an interface provided by the hardware decoder to input the encoded video data into the hardware decoder for hardware decoding to obtain original video data;
   rendering the original video data to obtain a video frame;
   displaying the video frame.

The above electronic device may further include a communication bus and/or a communication interface. The processor 402, the communication interface and the memory 401 communicate with each other via the communication bus.

The above-mentioned communication bus in the electronic device may be a Peripheral Component Interconnect (PCI) bus or an Extended Industry Standard Architecture (EISA) bus, etc. This communication bus may be divided into address bus, data bus, control bus and the like. For convenience of representation, this communication bus is only represented by a thick line in figures, but it does not mean that there is only a bus or only a type of bus.

The communication interface is used for communication between the above electronic device and other devices.

The memory may include a Random Access Memory (RAM) or a Non-Volatile memory (NVM), such as at least one disk memory. Optionally, the memory may also be at least one storage device located away from the above-mentioned processor.

The above processors may be general-purpose processors, including Central Processing Unit (CPU), Network Processor (NP), etc.; they may also be a Digital Signal Processor (DSP), Application Specific Integrated Circuit (ASIC), Field-Programmable Gate Array (FPGA) or other programmable logic devices, discrete gates or transistor logic devices, discrete hardware components.

In yet another embodiment of the present application, a computer readable storage medium is further provided, which stores a computer program thereon, and the computer program, when executed by a processor, implements the steps of any one of the above-mentioned multimedia playback methods.

In yet another embodiment of the present application, a computer program product containing instructions is further provided, which, when running on a computer, causes the computer to carry out the steps of any one of the multimedia playback methods in the above-mentioned embodiments.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available media. The usable media may be magnetic media (such as a floppy disk, a hard disk, a magnetic tape), optical media (such as DVD), or Solid State Disk (SSD) and the like.

It should be noted that in this article, relational terms such as first and second are only to distinguish one entity or operation from another, and do not necessarily require or imply any actual relationship or order between these entities or operations. Moreover, the terms "include", "comprise", or any other variation thereof are intended to encompass a non-exclusive inclusion, such that a process, method, article, or device that includes a series of elements not only includes those elements, but also other elements that are not explicitly listed, or also include elements inherent in such a process, method, article, or device. Without further limitations, the elements limited by the statement "including one..." do not exclude the existence of other identical elements in the process, method, article, or device that includes the elements.

The various embodiments in this specification are described in a relevant manner, and the same and similar parts between the various embodiments can be referred to each other, and each embodiment focuses on the differences from other embodiments. In particular, for the embodiments of system, since the description is basically similar to the embodiments of method, it is relatively simple, and the relevant points can be referred to the partial description of the embodiment of the method.

The above descriptions are only preferred embodiments of the present invention, and are not intended to limit the scope of the invention. Any modification, equivalent replacements, improvements, etc. made within the spirit and principles of the invention shall be included within the scope of protection of the present invention.

## Claims

1. A multimedia playback method, comprising:
acquiring an encapsulated video code stream to be played by a browser, wherein a hardware decoder and a WebAssembly, Wasm, module are integrated in the browser;
invoking the Wasm module to parse the encapsulated video code stream to obtain encoded video data in the encapsulated video code stream;
invoking an interface provided by the hardware decoder to input the encoded video data into the hardware decoder for hardware decoding to obtain original video data;
rendering the original video data to obtain a video frame;
displaying the video frame.

2. The method according to claim 1, wherein invoking the interface provided by the hardware decoder to input the encoded video data into the hardware decoder for hardware decoding to obtain the original video data comprises:
invoking the interface provided by the hardware decoder to input the encoded video data into the hardware decoder running in a background process for hardware decoding to obtain the original video data, wherein the background process is a thread independent of a main thread for running the browser.

3. The method according to claim 2, wherein rendering the original video data to obtain the video frame comprises:
invoking an interface provided by the browser by the main thread or the background process, to render the original video data to obtain the video frame.

4. The method according to claim 2, wherein the original video data is bitmap data, the method further comprises:
storing the original video data in a preset bitmap linked list;
wherein rendering the original video data to obtain the video frame comprises:
extracting bitmap data from the bitmap linked list;
rendering the extracted bitmap data to obtain the video frame.

5. The method according to any one of claims 2 to 4, wherein invoking the interface provided by the hardware decoder to input the encoded video data into the hardware decoder running in the background process for hardware decoding to obtain the original video data comprises:
invoking the interface provided by the hardware decoder to input the encoded video data into the hardware decoder running in the background process for hardware decoding through a PostMessage messaging method to obtain the original video data.

6. The method according to claim 1, wherein invoking the Wasm module to parse the encapsulated video code stream to obtain the encoded video data in the encapsulated video code stream comprises:
invoking a demultiplexing DEMUX module in the Wasm module to parse the encapsulated video code stream to obtain raw video data;
storing the raw video data in a preset raw data linked list as the encoded video data in the encapsulated video code stream.

7. The method according to claim 1, wherein the method further comprises:
acquiring an encapsulated audio code stream to be played by the browser;
invoking the Wasm module to parse the encapsulated audio code stream, to obtain encoded audio data in the encapsulated audio code stream;
decoding the encoded audio data to obtain original audio data;
rendering the original audio data to obtain an audio signal;
playing the audio signal.

8. The method according to claim 7, wherein the original audio data is pulse code modulation, PCM, data, the method further comprises:
storing the original audio data in a preset PCM linked list;
rendering the original audio data to obtain the audio signal comprises:
extracting PCM data from the PCM linked list;
rendering the extracted PCM data to obtain the audio signal.

9. The method according to claim 7, wherein decoding the encoded audio data to obtain the original audio data comprises:
invoking the Wasm module to decode the encoded audio data to obtain the original audio data; or
invoking the interface provided by the hardware decoder to input the encoded audio data into the hardware decoder for hardware decoding to obtain the original audio data.

10. A browser, comprising a main thread module, a hardware decoding module, and a WebAssembly, Wasm, module; wherein
the main thread module is configured for acquiring an encapsulated video code stream to be played by the browser;
the Wasm module is configured for parsing the encapsulated video code stream to obtain encoded video data in the encapsulated video code stream;
the hardware decoding module is configured for invoking an interface provided by a hardware decoder to input the encoded video data into the hardware decoder for hardware decoding to obtain original video data; rendering the original video data to obtain a video frame; displaying the video frame.
